# EUROPEAN PATENT SPECIFICATION

(11) **EP 1 316 331 B1**
(45) Date of publication and mention of the grant of the patent: **11.07.2007**
(21) Application number: 02258125.0
(22) Date of filing: 26.11.2002
(51) Int. Cl.: A62B 7/02, B63C 11/24, B01D 53/04

(54) **Method for determining the remaining adsorption capacity of a carbon dioxide scrubber and associated apparatus**
Verfahren zur Bestimmung der Adsorptionkapazität eines Systems zur Entfernung von Kohlendioxid und zugehörige Vorrichtung
Procédé pour déterminer la capacité d'adsorption dans un dispositif pour éliminer le dioxyde de carbone et le dispositif associé

(30) Priority: 30.11.2001 GB 0128732
(43) Date of publication of application: 04.06.2003
(73) Proprietor: Parker, Martin John, Cornwall TR13 0BY (GB); Parker, David, Porthleven Cornwall RT13 9JS (GB)
(72) Inventor: Parker, Martin John, Helston Cornwall TR13 0BY (GB)
(74) Representative: Shelley, Mark Raymond

(56) References cited:
- WO-A-99/13944
- US-A- 4 440 162
- US-A- 4 816 043
- US-A- 6 003 513
- DATABASE WPI Section Ch, Week 200155 Derwent Publications Ltd., London, GB; Class J01, AN 2001-501075 XP002234484 & KR 2001 017 457 A (KOREA ADVANCED ENVIRONMENT LAB CO LTD), 5 March 2001 (2001-03-05)

## Description

The present invention relates to carbon dioxide scrubbers and in particular concerns carbon dioxide scrubbers for breathing apparatus such as may be used for underwater diving or in other hostile environments in which a user may need a supply of breathable gas. Such uses include fire fighting where the atmosphere may be heavily polluted with combustion products and noxious gases, other industrial environments where the atmosphere may be polluted or otherwise unbreathable, or at high altitude where the atmosphere itself is too thin or effectively non-existent. The term re-circulating gas self-contained breathing apparatus used herein refers to both closed circuit and semi-closed circuit re-breathers and any other type of re-breathing apparatus in which at least a portion of the exhaled gas is recirculated.

Although applicable to a wide range of other uses the present invention will be described hereinafter with particular reference to its application to underwater breathing apparatus for diving applications. It will be understood, however, that this description is provided without prejudice to the generality of the invention or its range of applications.

It is well known to provide divers with self-contained underwater breathing apparatus in order to prolong the time for which they can remain below the surface of the water. The most widely used self-contained breathing apparatus comprises a rigid container within which is housed a supply of compressed air which is allowed out of the container via a high pressure or first stage regulator and directed through a flexible hose to a mouthpiece containing a demand valve including a second stage regulator which acts automatically to open and close as the diver inhales and exhales. Such systems are known as open-circuit breathing apparatus because exhaled gas is allowed to pass directly out into the marine environment so that a stream of bubbles is emitted upon each exhalation. If the compressed gas breathed from the gas container is air a large proportion of the exhaled gas will constitute nitrogen which is present in air in an approximate ratio of 4:1 with oxygen as is well known. In other words 80% of the air which is breathed by the diver, and therefore 80% of the content of the compressed air container, or air bottle, comprises little more than a vehicle for the oxygen some of which is converted to carbon dioxide during its residence in the lung. Thus 80% of the breathed gas is not really needed by the body except to dilute the oxygen. It is not possible to breathe pure oxygen below 10 m since at higher pressures oxygen is toxic.

Proposals have in the past been made for so-called closed circuit or "re-breather" apparatus in which the carbon dioxide content of exhaled air is removed from the exhaled air outside the body, fresh oxygen is introduced to replace that consumed, and the thus-reconditioned air returns to the diver for re-breathing. In this way it is necessary for the rebreather to have only sufficient nitrogen within the breathing circuit to allow circulation, for example, only two or three lungfuls of nitrogen sufficient to circulate around the closed circuit. Such a system is described, for example, in US Patent 4 964 404 to William C Stone and in US Patent 3 556 098 to John W Kanwisher and Walter A Starck II. These Patentees were not the first to devise closed circuit re-breather apparatus, however, it being known that so-called "frogmen" used re-breather apparatus during World War 2 in order to avoid the tell-tale bubbles rising to the surface upon exhalation in an open-circuit system such as the traditional compressed air bottle arrangement described above. US Patent 4 964 404 describes an improved such mixed gas breathing apparatus in which a container for exhaled gas (the so-called counterlung) is formed in two parts, a first part communicating with a hose leading from a mouthpiece to a carbon dioxide removal filter, and a second part in the line between the carbon dioxide removal filter and the mouthpiece. The carbon dioxide removal filter in the system described in US 3 556 098 includes a chamber housing oxygen partial pressure sensors used to detect the oxygen content in the exhaled gas and to reinstate the oxygen balance by introducing oxygen through a valve controlled indirectly by the sensors.

In the applicant's patent application WO-A-9 9 139 44 the carbon dioxide removal filter comprises a filter bed of re-agent material housed between circular permeable barriers in a cylindrical container having a central axial member.

In self-contained underwater breathing apparatus the carbon dioxide removal filter comprises a filter bed of re-agent material housed within a cylindrical container within the recirculating circuit to safely remove exhaled carbon dioxide. In normal operation the re-agent material prevents the exhaled carbon dioxide passing through the filter and back to the user's lungs. However when the re-agent material becomes exhausted so-called "breakthrough" occurs and carbon dioxide passes through the filter and if the user continues to breathe through the breathing apparatus the carbon dioxide concentration will increase until it reaches toxic levels.
Proposals have been made for detecting the exhaustion of the carbon dioxide re-agent material by directly measuring the carbon dioxide concentration of the recirculating gases. However, these proposals have proved difficult and relatively expensive to implement in practice since although it is possible to accurately and reliably measure carbon dioxide concentrations in air at atmospheric pressures it is increasingly difficult to do so at hyperbarric pressures or in non-air gas environments. For example, it is relatively easy to accurately measure concentrations of 0.25KPa partial pressure at atmospheric pressure, that is to say 0.25% of the surface pressure. At diving depths of 10m, 30m, 70m and 150m, the ambient pressure increases to 2 bar, 4 bar, 8 bar and 16 bar respectively and the same carbon dioxide concentration is 0.125% at 10m, 0.0625% at 30m, and 0.03125% at 70m and 0.015625% at 150m. When measuring carbon dioxide concentrations at these pressures accurate calibration is extremely important. However, this level of accuracy tends to be limited to mass spectrometers. This is a particular problem for deep water diving applications since the time interval between detecting relatively small levels of carbon dioxide and detecting dangerous levels reduces with depth. For example, the time interval can range from a few minutes at depths of 20m to a few seconds at 100m. In this regard, if a warning signal is given when carbon dioxide is detected it is often too late for the diver to react. In addition, the detection of high carbon dioxide concentrations can only provide an indication that exhaustion has occurred. There is no indication that exhaustion is about to occur and the detected onset of exhaustion of the re-agent material may provide insufficient warning for divers, particularly at depths of say 40m or more.

According to an aspect of the invention there is provided a breathing apparatus of the type in which exhaled gas is passed through a body of re-agent material for removal of at least a proportion of the carbon dioxide content from the exhaled gas prior to or following injection of a determined quantity of oxygen or a mixture of oxygen and other gases to the gas and presentation of the gas for re-breathing; the said apparatus is described in claims 1-16.

In the above mentioned aspect the temperature sensors measure the temperature increase due to the exothermic chemical reaction within the re-agent material due to carbon dioxide gas being converted into a solid carbonate compound by the action of the re-agent material removing the carbon dioxide gas from the recirculating gas flow. The heat that is generated by this exothermic reaction causes a local temperature rise. The inventors have found that the temperature of the re-agent material increases in a substantially linear manner through the body of the re-agent material until it reaches a substantially uniform operating temperature. It is to be appreciated that the operating temperature varies with scrubber design, the type of re-agent material, ambient temperature, the density of the re-agent material and the breathing rate of the user. The progression of the temperature rise through the body of the re-agent material occurs in the gas flow direction and may be considered to represent a "warm temperature front" or a reaction front as it progresses from the inlet end to the outlet end of the re-agent material. As the re-agent material is used, that is to say converted to a carbonate compound, the material begins to cool. The re-agent material that is first exposed to the carbon dioxide is used, or consumed, first and the material that is exposed last is the last to be consumed. In this respect, cooling of the re-agent material also progresses through the body of the material in the gas flow direction in a linear manner. The progression of the temperature reduction through the body of the re-agent material may be considered to represent a "cold front". Thus, by determining the temperature difference, or gradient, between the temperature sensors once the re-agent material has warmed up the position of the cold front can be determined, which can in turn be used to determine the remaining life of the unused re-agent material.

Instead of measuring the carbon dioxide content of the reconditioned gas directly, the above aspect of the invention measures the activity of the chemical reaction within the re-agent material to determine the remaining absorbing capacity of the material and therefore the remaining life of the filter cartridge before exhaustion of the re-agent material and carbon dioxide breakthrough. This aspect of the invention provides a simple and relatively inexpensive apparatus for providing a pre-emptive warning of so-called CO₂ breakthrough by measuring the proportion of re-agent material that is exhausted and thereby the remaining carbon dioxide absorbing capacity of the cartridge. The apparatus is not affected by humidity, gas composition or pressure since it does not measure carbon dioxide directly. The temperature sensors have very low power requirements and in particular the sensors do not require absolute calibration since all temperature measurements are relative, that is to say, it is the temperature difference between sensors that is important and not the absolute temperature between the parts of the re-agent material where the sensors are located.

Preferably, the sensors are disposed in at least a first direction which corresponds to the direction of the gas flow through the re-agent material, thereby to determine the temperature gradient in the said flow direction.

The exothermic reaction occurs when the carbon dioxide in the recirculating gas flow first comes into contact with active re-agent material. Initially, the warm reaction front moves along the length of the filter cartridge in the direction of the gas flow in the cartridge. In this way as the reaction front moves along the length of the cartridge the temperature profile or gradient that exists in the re-agent material due to the reaction also moves in the direction of the gas flow.

A plurality of temperature sensors are distributed throughout the said re-agent material in the gas flow direction for determining the temperature distribution in the said re-agent material, in the gas flow direction, during carbon dioxide removal.

In preferred embodiments, the apparatus further comprises a means for comparing the said detected temperature distribution in the re-agent material with a respective pre-determined temperature distribution characteristic for the said re-agent material, and an alerting means which is actuated in response to detected differences between the said detected distribution and the said pre-determined characteristic.

Preferably, the apparatus further comprises means for determining when the detected temperature difference between at least a pair of temperature sensors exceeds a pre-determined maximum value.

In preferred embodiments, the apparatus further comprises a pressure sensor and a means for selecting the said pair of temperature sensors from a plurality of temperature sensors in the re-agent material in accordance with the pressure measured by the said pressure sensor.

Preferably, the apparatus further comprises means for determining the said pre-determined maximum temperature difference in accordance with the pressure measured by the said pressure sensor.

In preferred embodiments, the said alerting means is actuated in response to the said detected temperature difference exceeding the said pre-determined value.

Preferably, the said alerting means is actuated in response to a detected difference between a detected transient temperature distribution in the said re-agent material and a pre-determined transient temperature distribution characteristic for the said re-agent material. It is to be understood that the term "transient temperature distribution" refers to the temperature distribution in the re-agent material immediately after the commencement of the removal of carbon dioxide gas and prior to the re-agent material being heated to a steady state operating temperature by the exothermic reaction.

Preferably, the said remaining carbon dioxide absorbing capacity is determined in accordance with the steady state temperature distribution in the re-agent material. It is to be understood that the term "steady state temperature distribution" refers to the temperature distribution in the re-agent material once the re-agent material has been heated to a steady state operating temperature by the exothermic reaction. The steady state temperature distribution may vary with time due to cooling of the non-active spent re-agent material as described above.

In preferred embodiments, the said steady state temperature distribution comprises an upstream region of increasing temperature in the flow direction and a region downstream thereof of substantially constant and elevated temperature, and the said means for determining the remaining carbon dioxide content comprises means for identifying the position of transition in the said re-agent material between the said upstream and downstream regions.

In preferred embodiments, the said remaining carbon dioxide absorbing capacity is preferably determined in accordance with the position of the drop in measured temperature in the re-agent material. By determining the position of the temperature drop in the re-agent material it is possible to readily determine the current position of the "cold front", that is to say the position in the re-agent material behind which the carbon dioxide gas is no longer reacting with the re-agent material and in front of which the carbon dioxide is still reacting with the active re-agent material. In this way it is possible to alert the user that the "cold front" has reached a certain position within the re-agent material which corresponds to a known proportion of the useful life of the re-agent material and thereby provide the user with an indication of the predicted life of the remaining active re-agent material. The said temperature sensors may be distributed throughout the said re-agent material for determining the three dimensional temperature profile of the said re-agent material generated during carbon dioxide removal.

In some embodiments it may be preferable to establish a three-dimensional temperature profile of the re-agent material to more accurately monitor the progress of the reaction front through the cartridge. In this way it is also possible to identify the shape of the reaction front in the re-agent material and identify spurious signals from the temperature sensors if the temperature distribution in the re-agent material is found to be irregular due to one or more erroneous signals. This can also be used to identify so called "channelling", that is to say canalising of the gas flow along preferred channels in the cartridge in the direction of the gas flow. If the gas flows along such preferred paths within the re-agent material it is possible that large proportions of active re-agent material will be by-passed leading to carbon dioxide breakthrough and exhaustion of the filter even though the by-passed re-agent material remains active and unused. By monitoring the re-agent material in this way it is possible to identify such channelling of the gas flow and provide an indication that premature breakthrough will occur.

The said alerting means may be actuated in response to the detection of a preferred channelled gas flow path in the re-agent material. This readily enables the user to be alerted where premature breakthrough will occur through canalising of the gas flow through the re-agent material.

In preferred embodiments, the apparatus further comprises means for receiving a water depth sensor signal and means for applying a safety factor to the determined remaining absorbing capacity of the said re-agent material in accordance with the said depth signal. In this way it is possible to alter a safety factor for the duration of the remaining active material in the cartridge in accordance with the depth of the apparatus when used in a diving embodiment. For example, the safety margin can be increased when the depth is increased.

Preferably, the said determining means and/or the said depth signal receiving means is/are incorporated in a microprocessor. The signals from the temperature sensors and/or depths sensor can be readily processed in a microprocessor to determine the estimated remaining life of the re-agent material in the filter cartridge.

The apparatus may further comprise a display means for displaying information relating to the determined remaining carbon dioxide absorbing capacity of the said re-agent material. The user can be readily provided with information relating to the estimated remaining life of the cartridge.

According to another aspect of the invention there is provided a method of determining the remaining carbon dioxide absorbing capacity of a re-agent material in a carbon dioxide scrubber device of the type in which exhaled gas is passed through a body of re-agent material for removal of at least a proportion of the carbon dioxide content from the exhaled gas prior to or following injection of a determined quantity of oxygen or a mixture of oxygen and other gases to the gas and presentation of the gas for re-breathing; the said method being described in claims 18-24.

An embodiment of the present invention will now be more particularly described, by way of example, with reference to the accompanying drawings, in which:
Figure 1 is a schematic diagram illustrating a circuit for a self-contained re-breather formed as a first embodiment of the present invention;
Figure 2 is a schematic view from the rear of an embodiment of the invention illustrating the arrangement of the component parts; and,
Figure 3 shows the time domain temperature characteristics of a plurality of temperature sensors at respective points in a body of re-agent material.

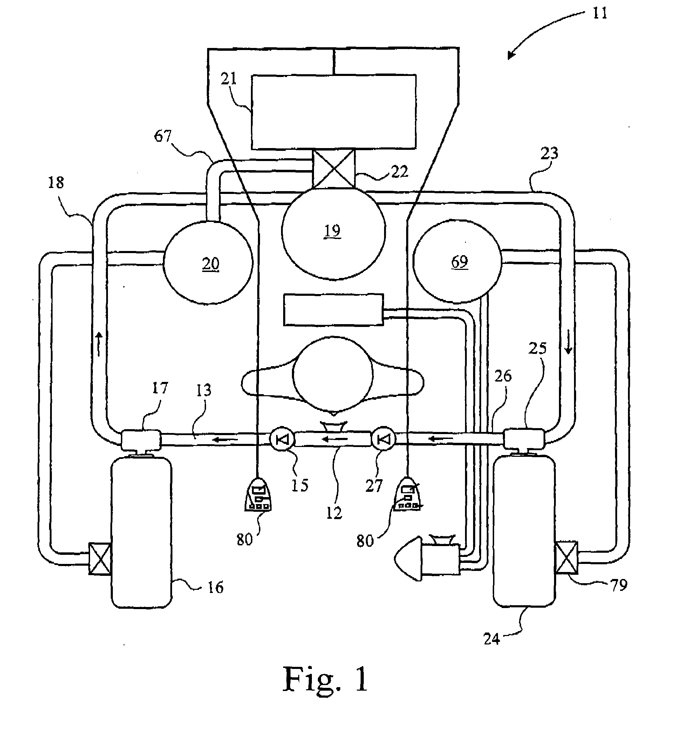

Referring first to Figure 1, self-contained re-breather apparatus generally indicated with the reference numeral 11 comprises a closed circuit leading from a mouthpiece 12 along an air hose 13 within which is a unidirectional valve indicated schematically 15 and connected to an exhaled-gas counterlung 16 by a T-coupling 17.

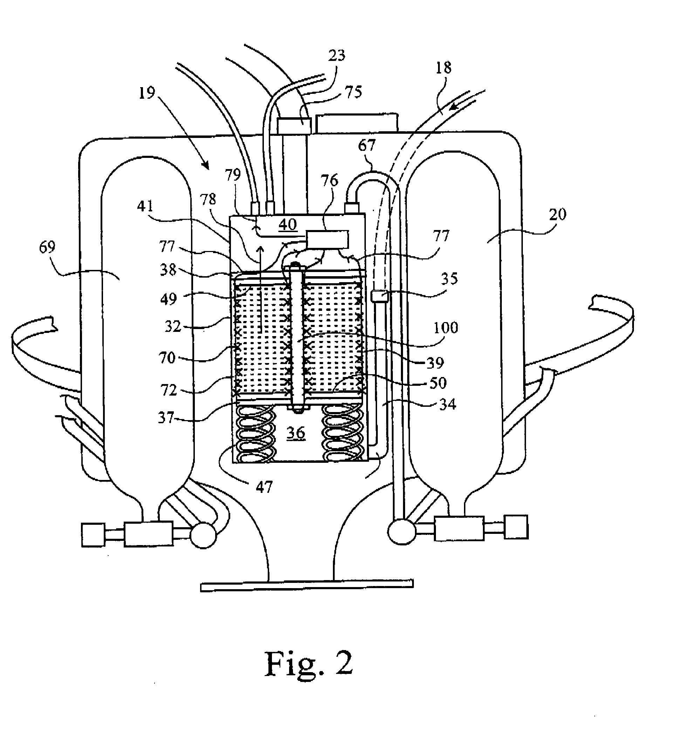

From the T-coupling 17 of the exhaled gas counterlung 16, which in use contains oxygen-depleted exhaled gas, extends a connector hose 18 leading to a gas reconditioning unit 19 which will be described in more detail in relation to Figures 2 et seq. In the gas reconditioning unit 19 carbon dioxide in the exhaled gas is removed and oxygen from a reservoir 20 is introduced (under the control of a control system) via a solenoid valve 22. The reconditioned gas is drawn from the unit 19 via an air hose 23 and delivered to a second counterlung 24 in the form of a flexible sac joined to the hose 23 by another T-coupling 25 which, like the T-coupling 17 is swivelable to allow free movement of the air hose during use and for ease of assembly. From the T-coupling 25 a breathing hose 26 leads to the mouthpiece 12 via a further unidirectional valve 27 shown schematically in Figure 1. A reservoir 69 of diluent gas is directly connected to a control valve 79 on the counterlung 24.

Referring to Figure 2, the exhaled air treatment apparatus generally indicated 19 comprises an upright cylindrical container 32 having an inner cartridge 39, which will be described in more detail below, a lower inlet port 33 with a rigid inlet duct 34 extending parallel to the axis of the container 32 and having a releasable coupling 35 for connection to the air hose 18 leading from the T-coupling 17. Within the container 32, as illustrated in the schematic sectional view of Figure 2, there is a lower chamber 36 into which the port 33 opens and which houses the inner cartridge 39.

At each end of the cartridge 39 there is a "spider" 37, 38 which supports respective non-woven gas-permeable, water impermeable filters 49, 50. The cartridge 39 contains a granular material, such as soda lime, which absorbs carbon dioxide. The composition of Sofliolime (TM), a commercially available soda lime, comprises:
Ca (OH)₂ 70-80%
Na (OH) 4-5%
H₂O 17%
The reaction of Sofnolime can be represented by:
CO₂ + H₂O → H₂ CO₃
H₂ CO₃ + 2NaOH → Na₂ CO₃₊2H₂O
Na₂ CO₃ +Ca(OH)₂ → CaCO₃+ 2NaOH

A plurality of temperature sensors 70 (indicated schematically in the drawing of Figure 2) are distributed in the cartridge 39 on the inner surface of the cartridge cylinder wall 72 and also along a central stem 100. The stem 100 passes through the granular re-agent material contained in the cartridge 39 for securing the spiders 37, 38 and membranes 49, 50 to the cartridge. The temperature sensors 70 on the cylinder 72 and stem 100 are aligned with one another in the axial direction of the cylinder and spaced by equal intervals in the axial direction of the cylinder, for instance 1 to 3 cm intervals. The temperature sensors are electrically connected to a microprocessor unit 76 in the upper chamber 40 of the container so that the output signals from the respective temperature sensors can be input to the microprocessor for determining the temperature distribution in the granular re-agent material. In the drawing of Figure 2 the electrical connection of the temperature sensors to the microprocessor is shown schematically and represented by lines 77. In preferred embodiments the sensors 70 are semi conductor temperature sensors.

The microprocessor is suitably programmed to determine the temperature gradient in the re-agent material due to carbon dioxide removal when re-circulating gas flows through the container from the lower chamber 36 to the upper chamber 40 as indicated by the direction of arrow 78 in Figure 2. The microprocessor is further programmed to determine the position of the exothermic carbon dioxide absorbing reaction front (warm front) in the granular material by processing the temperature distribution data obtained from the sensors 70, to compare that data with respective pre-determined characteristics for a correctly functioning scrubber so that any deviations can be identified and the user can be warned and predict the remaining carbon dioxide absorbing capacity of the re-agent material in accordance with the temperature distribution and/or temperature gradients present in the re-agent material. The microprocessor is further programmed to monitor the progress of the reaction front as it progresses through the re-agent material in the cartridge 39 in the direction of the gas flow 78. When the reaction front reaches and/or passes a predetermined position in the cartridge a signal is generated by the microprocessor to provide an output signal on line 79 to an indicator display 80 (Figure 1) for warning the user of the proportion of active re-agent material remaining in the cartridge. The microprocessor is also programmed to determine the area of carbon dioxide reactivity and predict the remaining carbon dioxide absorbing capacity of the re-agent material in accordance with the temperature distribution and/or temperature gradients present in the re-agent material. The microprocessor is further programmed to monitor the progress of the cooling of the re-agent material along the length of the cartridge 39 in the direction of the gas flow 78. For instance, when a sensor in a predetermined position experiences cooling to a predetermined temperature below the temperature of the sensors in the warmest part of the active material, a signal is generated by the microprocessor to provide an output signal on line 79 to an indicator display 80 (Figure 1) for alerting the user to the proportion of active re-agent material remaining in the cartridge. The warning signal may be in the form of flashing lights (LEDs) on the display or alternatively or additionally it may compromise an audible or vibration alert. Several such warning signals may be generated prior to breakthrough, for instance as the amount of active re-agent material is reduced further and the subsequent temperature sensors cool, the positions of which have been pre-determined.

In preferred embodiments the microprocessor is also programmed to recognise channelling of the gas flow through a preferred path in the re-agent material so that the user may be alerted to the possibility that premature breakthrough could occur if this is detected.

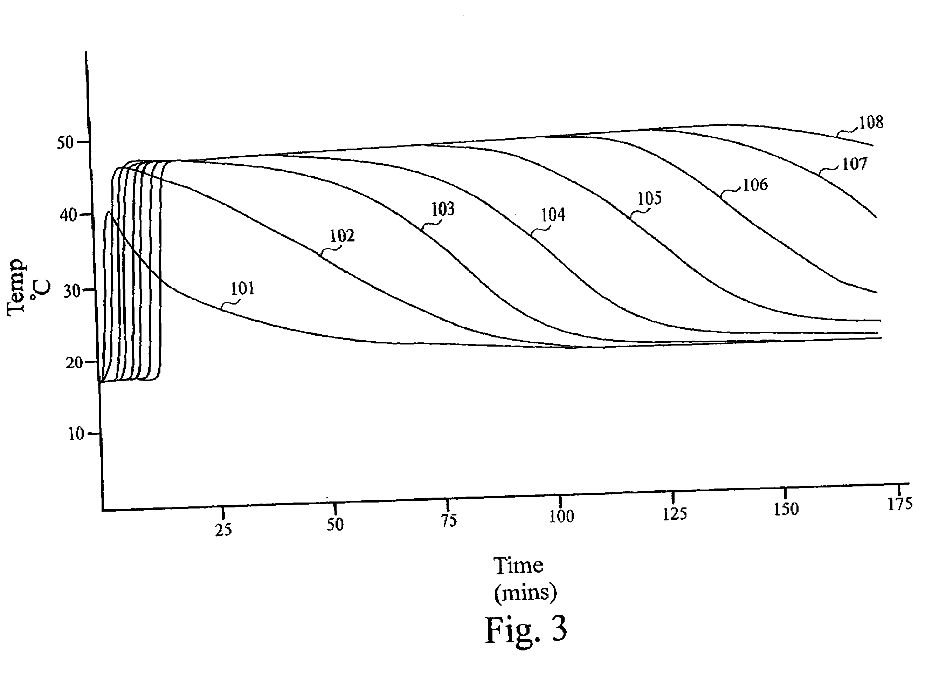

The invention can be readily understood by referring to the experimentally derived time domain temperature characteristics of Figure 3 for eight equally spaced temperature sensors positioned along the central stem 100 and aligned axially in the gas flow direction in a body of re-agent material contained within the cartridge 39. As can be seen in Figure 3 when the re-agent material is first exposed to the untreated gas the re-agent material heats up in a substantially linear manner, that is to say in the first 20 minutes of operation the first temperature sensor 101 begins to record an increase in temperature followed by the next sensor 102, which is downstream of the first, then followed by the remaining sensors until eventually the majority of the body re-agent material is heated to substantially the same temperature. During this transient phase the re-agent material is heated in a linear manner with each subsequent sensor in the gas flow direction recording a temperature which lags the temperature of an adjacent upstream sensor by about 120 seconds. As explained this transition is analogous to a warm reaction front moving from the inlet end to the outlet end of the re-agent material.

Once the re-agent material has warmed up and attained a substantially constant temperature the first sensor 101 begins to record a drop in temperature due to the exhaustion of the re-agent material in the region of the sensor. The re-agent material cools in a linear manner as the calcium hydroxide is slowly converted to calcium carbonate. As can be seen in Figure 3 the re-agent material cools in a substantially linear manner, that is to say after a short period the first temperature sensor 101 begins to record a decrease in temperature followed by the next sensor 102, then followed by the remaining sensors until eventually the final sensor 108 begins to cools and carbon dioxide breakthrough occurs. During this steady state phase the re-agent material cools down in a linear manner with each succeeding sensor in the gas flow direction recording a temperature fall which lags the temperature of an adjacent downstream upstream sensor by about 20 minutes, for example. As explained above this transition is analogous to a cold reaction front moving from the inlet end to the outlet end of the re-agent material.

It will be appreciated that the temperature characteristic shown in Figure 3 can be compared with a pre-determined temperature characteristic for the canister design. In this respect it is possible to monitor the temperature distribution of the re-agent material and compare it with known data stored within a memory accessible by the microprocessor so that an alert signal may be generated if the comparison indicates a mismatch between the actual recorded temperature distribution and the and pre-determined stored in the memory. This is particularly useful for alerting the user to potential problems with the canister or re-agent material at the onset of use since the pattern of the transient temperature distribution can be monitored and compared with a respective pre-determined distribution. For instance, if some or all of the sensors heat up substantially simultaneously this may indicate that there is no re-agent material in the canister, or if the first sensor heats up but the subsequent sensors do not follow in the expected time period carbon dioxide could be bypassing the re-agent material, for instance if the sealing O-ring was damaged or missing. In addition, channelling may be detected if the sensors do not heat up sequentially as expected with one or more downstream sensors recording higher temperatures than one or more sensors upstream thereof or the upstream sensor do not heat up at all.
An appropriate signal may be generated to warn the diver of the remaining life of the re-agent material when say sensor 107 records a temperature which is 5 degrees C less than sensor 108, for example, or when sensor 106 is 5 degrees C less than 108 if a greater warning period is require or if the diver is at a greater depth. By combining information from a depth sensor different sensors and different temperature differences can be selected for generating an alerting signal, for example if 106 < 108 by 5 degrees C for 20m, 105 < 108 by 5 degrees C for 40m, 104 < 108 by 5 degrees for 100m.

Although the embodiments shown in the accompanying drawings refer to a breathing apparatus in which carbon dioxide is removed from the gas prior to injection of a determined quantity of oxygen, embodiments are envisaged in which carbon dioxide is removed from the gas following injection of oxygen or a mixture of oxygen and other gas(es). In other embodiments, the breathing apparatus can be a so-called "semi-closed circuit" rebreather apparatus where the injected gas is one that is suitable for direct breathing at a determined depth. For example, for a 20m dive an appropriate gas is 50% oxygen, 50% nitrogen, for a 40m dive depth an appropriate gas is 28% oxygen, 62% nitrogen. For depths greater than 40m a mixture of oxygen, nitrogen and helium is appropriate. In a semi-closed rebreather apparatus the different gasses are mixed directly with oxygen prior to diving, independently of the rebreather apparatus, so that separate reservoirs 20 and 69 are not required.

Although aspects of the invention have been described with reference to the embodiments shown in the accompanying drawings it is to be understood that the invention is not limited to those precise embodiments and various changes and modifications may be effected without exercise of further inventive skill and effort, for example the temperature sensors may be located on the central stem only, on a probe that extends into the re-agent material in the region of the central stem, on the inner side of the cylindrical sidewall only or on the surface of an intermediate cylindrical sidewall positioned between the stem and the outer sidewall, provided that these modifications fall within the scope of the appended claims.

## Claims

1. Apparatus for a carbon dioxide scrubber device of the type in which exhaled gas is passed through a body of re-agent material for removal of at least a proportion of the carbon dioxide content from the exhaled gas prior to or following injection of a determined quantity of oxygen or a mixture of oxygen and other gases to the gas and presentation of the gas for re-breathing; the said apparatus comprising a plurality of temperature sensors disposed in the said re-agent material for measuring the temperature difference between the respective locations of the sensors in the re-agent material during carbon dioxide removal, and processing means for determining the remaining carbon dioxide absorbing capacity of the said re-agent material in accordance with the measured temperatures of the said sensors, the processing means being capable of determining the said remaining absorbing capacity of the said re-agent material directly from said measured temperatures independently of pre-determined calibration data.

2. Apparatus as claimed in Claim 1 wherein the sensors are disposed in at least a first direction which corresponds to the direction of the gas flow through the re-agent material, in use from an upstream end to a downstream end thereof, thereby to determine the temperature gradient in the said flow direction.

3. Apparatus as claimed in Claim 1 or Claim 2 wherein a plurality of temperature sensors are distributed throughout the said re-agent material in the said gas flow direction for determining the temperature distribution in the said re-agent material, in the gas flow direction, during carbon dioxide removal.

4. Apparatus as claimed in Claim 3 further comprising a means for comparing the said detected temperature distribution in the re-agent material with a respective pre-determined temperature distribution characteristic and an alerting means which is actuated in response to detected differences between the said detected distribution and the said pre-determined characteristic.

5. Apparatus as claimed in Claim 4 further comprising means for determining when the detected temperature difference between at least a pair of temperature sensors exceeds a pre-determined maximum value.

6. Apparatus as claimed in Claim 5 further comprising a pressure sensor and a means for selecting the said pair of temperature sensors from a plurality of temperature sensors in the re-agent material in accordance with the pressure measured by the said pressure sensor.

7. Apparatus as claimed in Claim 5 further comprising means for determining the said pre-determined maximum temperature difference in accordance with the pressure measured by the said pressure sensor.

8. Apparatus as claimed in Claim 7 wherein the said pressure sensor is a water depth sensor.

9. Apparatus as claimed in any one of Claims 4 to 8 wherein the said alerting means is actuated in response to the said detected temperature difference exceeding the said pre-determined value.

10. Apparatus as claimed in any one of Claims 4 to 8 wherein the said alerting means is actuated in response to the detection of a preferred channelled gas flow path in the said re-agent material.

11. Apparatus as claimed in any one of Claims 4 to 8 wherein the said alerting means is actuated in response to a detected difference between a detected transient temperature distribution in the said re-agent material at the onset of carbon dioxide removal and a respective pre-determined transient temperature distribution characteristic for the said re-agent material.

12. Apparatus as claimed in any preceding claim wherein the said remaining carbon dioxide absorbing capacity is determined in accordance with the steady state temperature distribution in the re-agent material.

13. Apparatus as claimed in Claim 12 wherein the said steady state temperature distribution comprises an upstream region of increasing temperature in the flow direction and a region downstream thereof of substantially constant and elevated temperature, and the said means for determining the remaining carbon dioxide content comprises means for identifying the position of transition in the said re-agent material between the said upstream and downstream regions.

14. Apparatus as claimed in any preceding claim further comprising means for receiving a water depth sensor signal and means for adjusting the determined remaining carbon dioxide absorbing capacity of the said re-agent material in accordance with the said depth signal.

15. Apparatus as claimed in any preceding claim wherein the said determining means is incorporated in a microprocessor.

16. Apparatus as claimed in any preceding claim further comprising a display means for displaying information relating to the determined remaining carbon dioxide absorbing capacity of the said re-agent material.

17. A method of determining the remaining carbon dioxide absorbing capacity of a re-agent material in a carbon dioxide scrubber device of the type in which exhaled gas is passed through a body of re-agent material for removal of at least a proportion of the carbon dioxide content from the exhaled gas prior to or following injection of a determined quantity of oxygen or a mixture of oxygen and other gases to the gas and presentation of the gas for re-breathing; the said method comprising the steps of:
receiving signals from a plurality of temperature sensors distributed in the said re-agent material;
determining the temperature difference between the said sensors during carbon dioxide removal; and,
determining the remaining carbon dioxide absorbing capacity of the said re-agent material directly from the said measured temperatures independently of calibration data.

18. A method as claimed in Claim 17 wherein the sensors are disposed in at least a first direction which corresponds to the direction of the gas flow through the re-agent material, and the said method includes the step of determining the temperature gradient in the said flow direction.

19. A method as claimed in Claim 17 or Claim 18 wherein the said method further comprises the steps of: comparing the said detected temperature distribution in the re-agent material with a respective pre-determined temperature distribution characteristic for the said re-agent material; and, actuating an alerting means in response to detected differences between the said detected distribution and the said pre-determined characteristic.

20. A method as claimed in any one of Claims 17 to 19 wherein the said method further comprises the steps of: determining whether the detected temperature difference between at least a pair of temperature sensors exceeds a pre-determined maximum value; and actuating the said or an alerting means in response to the said detected temperature difference exceeding the said pre-determined value.

21. A method as claimed in any one of Claims 17 to 21 further comprising the step of actuating the said or an alerting means in response to a detected difference between a detected transient temperature distribution in the said re-agent material and a pre-determined transient temperature distribution characteristic for the said re-agent material.

22. A method as claimed in anyone of Claims 17 to 21 wherein the said remaining carbon dioxide absorbing capacity is determined in accordance with the steady state temperature distribution in the re-agent material.

23. A method as claimed in Claim 22 wherein the said steady state temperature distribution comprises an upstream region of increasing temperature in the flow direction and a region downstream thereof of substantially constant and elevated temperature, and the said step of determining the remaining carbon dioxide content comprises the step of identifying the position of transition in the said re-agent material between the said upstream and downstream regions.

24. A method as claimed in any one of Claims 17 to 23 wherein the said temperature sensors are distributed throughout the said re-agent material and the said method further comprises the step of determining the three dimensional temperature profile of the said re-agent material generated during carbon dioxide removal.

25. A method as claimed in any one of Claims 17 to 24 further comprising the step of receiving a water depth signal from a depth sensor and applying an adjustment to the determined remaining carbon dioxide absorbing capacity of the said re-agent material in accordance with the said depth signal.

26. A method as claimed in any one of Claims 17 to 25 further comprising the step of displaying on a display means information relating to the determined remaining carbon dioxide absorbing capacity of the said re-agent material.

## Patentansprüche

1. Apparat für einen Kohlendioxidwäscher jener Art, in dem Ausatemgas durch einen Reagenzmaterialkörper geführt wird, zur Auswaschung mindestens eines Teils des CO₂-Gehalts aus dem Ausatemgas vor oder nach dem Einblasen einer vorgegebenen Menge an Sauerstoff bzw. einem Gemisch aus Sauerstoff und anderen Gasen ins Gas, und um das Gas zum Rebreathing zur Verfügung zu stellen,
**dadurch gekennzeichnet, dass**
der Apparat mehrere im Reagenzmaterial angeordnete Temperatursensoren aufweist, die den Temperaturunterschied zwischen den einzelnen Einsatzstellen der Sensoren im Reagenzmaterial während der CO₂-Auswaschung messen, sowie ein Verfahren zur Ermittlung der restlichen CO₂-Absorptionsfähigkeit des Reagenzmaterials gemäß den gemessenen Temperaturen der Sensoren aufweist, wobei mit dem Verfahren die restliche Absorptionsfähigkeit des Reagenzmaterials direkt aus den unabhängig von den vorgegebenen Kalibrierdaten gemessenen Temperaturen festgestellt werden kann.

2. Apparat gemäß Anspruch 1, **dadurch gekennzeichnet, dass** die Sensoren in mindestens einer ersten Richtung angeordnet sind, die der Richtung des Gasflusses durch das Reagenzmaterial von einem Zuflussende zu einem Abflussende entspricht, wodurch sie das Temperaturgefälle in dieser Fließrichtung feststellen können.

3. Apparat gemäß Anspruch 1 oder 2, **dadurch gekennzeichnet, dass** mehrere Temperatursensoren über das Reagenzmaterial in der besagten Gasflussrichtung verteilt sind, um die Temperaturverteilung im Reagenzmaterial in Gasflussrichtung während der CO₂-Auswaschung feststellen zu können.

4. Apparat gemäß Anspruch 3, **dadurch gekennzeichnet, dass** er weiterhin ein Mittel aufweist, das die festgestellte Temperaturverteilung im Reagenzmaterial mit einem entsprechend vorgegebenen Temperaturverteilungs-Merkmal vergleicht, sowie eine Warneinrichtung, die betätigt wird, wenn Unterschiede zwischen der gemessenen Verteilung und dem vorgegebenen Merkmal festgestellt werden.

5. Apparat gemäß Anspruch 4, **dadurch gekennzeichnet, dass** er weiterhin ein Mittel aufweist, das feststellt, wenn der gemessene Temperaturunterschied zwischen mindestens einem Paar Temperatursensoren einen vorgegebenen Höchstwert überschreitet.

6. Apparat gemäß Anspruch 5, **dadurch gekennzeichnet, dass** er weiterhin einen Drucksensor und ein Mittel aufweist, welches das besagte Paar Temperatursensoren aus mehreren Temperatursensoren im Reagenzmaterial gemäß dem von dem besagten Drucksensor gemessenen Druck auswählt.

7. Apparat gemäß Anspruch 5, **dadurch gekennzeichnet, dass** er weiterhin ein Mittel aufweist, welches den vorgegebenen Höchsttemperaturunterschied gemäß dem vom Drucksensor gemessenen Druck feststellt.

8. Apparat gemäß Anspruch 7, **dadurch gekennzeichnet, dass** der Drucksensor einen Wassertiefenmelder darstellt.

9. Apparat gemäß einem der Ansprüche 4 bis 8, **dadurch gekennzeichnet, dass** die Warneinrichtung betätigt wird, wenn der ermittelte Temperaturunterschied den vorgegebenen Höchstwert überschreitet.

10. Apparat gemäß einem der Ansprüche 4 bis 8, **dadurch gekennzeichnet, dass** die Warneinrichtung betätigt wird, wenn im Reagenzmaterial ein sich anbahnender bevorzugter Gasflussweg entdeckt wird.

11. Apparat gemäß einem der Ansprüche 4 bis 8, **dadurch gekennzeichnet, dass** die Alarmeinrichtung betätigt wird, wenn ein Unterschied zwischen einer zu Beginn der CO₂-Auswaschung festgestellten Übergangs-Temperaturverteilung im Reagenzmaterial und einer Übergangs-Temperaturverteilung festgestellt wird, welche für das entsprechende Reagenzmaterial charakteristisch ist.

12. Apparat gemäß einem der vorhergehenden Ansprüche, **dadurch gekennzeichnet, dass** sich die restliche CO₂-Absorbtionsfähigkeit nach der stationären Temperaturverteilung im Reagenzmaterial richtet.

13. Apparat gemäß Anspruch 12, **dadurch gekennzeichnet, dass** die stationäre Temperaturverteilung eine Zuflussregion von zunehmender Temperatur in Fließrichtung und eine Abflussregion von im Wesentlichen konstanter und erhöhter Temperatur hat, und dass das besagte Mittel zur Bestimmung des restlichen CO₂-Gehalts eine Vorrichtung zur Identifizierung der Übergangsstelle in das Reagenzmaterial zwischen den Zufluss- und Abflussregionen aufweist.

14. Apparat gemäß einem der vorhergehenden Ansprüche, **dadurch gekennzeichnet, dass** er weiterhin ein Mittel aufweist, das ein Signal von einem Wassertiefenmelder empfängt, und ein Mittel aufweist, das die restliche CO₂-Absorptionsfähigkeit des Reagenzmaterials gemäß dem Tiefenmeldersignal verändern kann.

15. Apparat gemäß einem der vorhergehenden Ansprüche, **dadurch gekennzeichnet, dass** das Bestimmungsmittel in einem Mikroprozessor integriert ist.

16. Apparat gemäß einem der vorhergehenden Ansprüche, **dadurch gekennzeichnet, dass** er weiterhin eine Anzeige aufweist, die Informationen, welche sich auf die restliche CO₂-Absorptionskapazität des Reagenzmaterials bezieht, anzeigt.

17. Verfahren zur Bestimmung der restlichen CO₂-Absorptionsfähigkeit eines Reagenzmaterials in einem Kohlendioxidwäscher jener Art, in dem Ausatemgas durch einen Körper von Reagenzmaterial geführt wird, um mindestens einen Teil des CO₂-Gehalts vom Ausatemgas vor oder nach dem Einblasen einer vorgegebenen Menge von Sauerstoff bzw. eines Gemischs aus Sauerstoff und anderen Gasen ins Gas und der Bereitstellung des Gases zum Rebreathing auszuwaschen, wobei die Methode aus folgenden Verfahrensschritten besteht:
Empfang eines Signals von mehreren im Reagenzmaterial verteilten Temperatursensoren;
Bestimmung des Temperaturunterschieds zwischen den Sensoren während der CO₂-Auswaschung; und
Bestimmung der restlichen CO₂-Absorptionsfähigkeit des Reagenzmaterials direkt aus den gemessenen Temperaturen und unabhängig von Kalibrierdaten.

18. Verfahren gemäß Anspruch 17, **dadurch gekennzeichnet, dass** die Sensoren in mindestens einer ersten Richtung, die der Richtung des Gasflusses durch das Reagenzmaterial entspricht, angebracht sind, und dass das Verfahren einen Verfahrensschritt enthält, um das Temperaturgefälle in jener Flussrichtung zu bestimmen.

19. Verfahren gemäß Anspruch 17 oder 18, **dadurch gekennzeichnet, dass** das Verfahren weiterhin folgende Verfahrensschritte enthält: Vergleich zwischen der festgestellten Temperaturverteilung im Reagenzmaterial und einem entsprechenden vorgegebenen Temperaturverteilungs-Merkmal für das besagte Reagenzmaterial; und Betätigung einer Warneinrichtung, wenn Unterschiede zwischen der gemessenen Verteilung und dem vorgegebenen Merkmal festgestellt werden.

20. Verfahren gemäß einem der Ansprüche 17 bis 19, **dadurch gekennzeichnet, dass** es folgende Verfahrensschritte enthält: Feststellung, ob der gemessene Temperaturunterschied zwischen mindestens einem ersten Paar Temperatursensoren den vorgegebenen Wert überschreitet; Betätigung der besagten bzw. einer Warneinrichtung, die betätigt wird, wenn Unterschiede zwischen dem gemessenen Temperaturunterschied und dem vorgegebenen Wert festgestellt werden.

21. Verfahren gemäß einem der Ansprüche 17 bis 21, **dadurch gekennzeichnet, dass** es weiterhin den Verfahrensschritt enthält, die besagte bzw. eine Warneinrichtung zu betätigen, wenn ein Unterschied zwischen einer gemessenen Temperaturverteilung im Reagenzmaterial und einer vorgegebenen Übergangstemperaturverteilung festgestellt wird, welche für das Reagenzmaterial charakteristisch ist.

22. Verfahren gemäß einem der Ansprüche 17 bis 21, **dadurch gekennzeichnet, dass** sich die restliche CO₂-Absorbtionsfähigkeit nach der stationären Temperaturverteilung im Reagenzmaterial richtet.

23. Verfahren gemäß Anspruch 22, **dadurch gekennzeichnet, dass** die stationäre Temperaturverteilung eine Zuflussregion von zunehmender Temperatur in Fließrichtung und eine Abflussregion von im Wesentlichen konstanter und erhöhter Temperatur aufweist, und dass der Verfahrensschritt der Feststellung des restlichen CO₂-Gehalts den Verfahrensschritt enthält, die Übergangsposition im Reagenzmaterial zwischen den Zufluss- und Abflussregionen zu bestimmen.

24. Verfahren gemäß einem der Ansprüche 17 bis 23, **dadurch gekennzeichnet, dass** die Temperatursensoren über das gesamte Reagenzmaterial verteilt sind, und dass das besagte Verfahren weiterhin den Verfahrensschritt enthält, das dreidimensionale Temperaturprofil des Reagenzmaterials zu bestimmen, das während der CO₂-Auswaschung erzeugt wird.

25. Verfahren gemäß einem der Ansprüche 17 bis 24, **dadurch gekennzeichnet, dass** es weiterhin den Verfahrensschritt enthält, ein Wassertiefensignal von einem Wassertiefenmelder zu empfangen und die festgestellte restliche CO₂-Absorptionsfähigkeit des Reagenzmaterials gemäß dem Tiefenmeldersignal zu verändern.

26. Verfahren gemäß einem der Ansprüche 17 bis 25, **dadurch gekennzeichnet, dass** es weiterhin den Verfahrensschritt enthält, Informationen über die festgestellte restliche CO₂-Absorptionsfähigkeit des Reagenzmaterials auf einer Anzeige darzustellen.

## Revendications

1. Appareil pour un dispositif de lavage de dioxyde de carbone du type dans lequel du gaz expiré traverse un corps de matériau réactif pour la suppression ou l'enlèvement d'au moins une proportion de la teneur en dioxyde de carbone du gaz expiré avant ou suite à l'injection d'une quantité déterminée d'oxygène ou d'un mélange d'oxygène et d'autres gaz dans le gaz et la présentation du gaz pour la réinspiration ; ledit appareil comprenant une pluralité de capteurs de température disposés dans ledit matériau réactif pour mesurer la différence de température entre les emplacements respectifs des capteurs dans le matériau réactif lors de la suppression ou l'enlèvement du dioxyde de carbone, et un moyen de traitement destiné à déterminer la capacité d'absorption de dioxyde de carbone restante dudit matériau réactif selon les températures mesurées desdits capteurs, le moyen de traitement étant capable de déterminer ladite capacité d'absorption restante dudit matériau réactif directement à partir desdites températures mesurées indépendamment des données de calibrage prédéterminées.

2. Appareil selon la revendication 1 dans lequel les capteurs sont disposés dans au moins une première direction qui correspond à la direction du flux de gaz à travers le matériau réactif, fonctionnant à partir d'une extrémité en amont vers une extrémité en aval de celui-ci, déterminant ainsi le gradient de température dans ladite direction de flux.

3. Appareil selon la revendication 1 ou 2 dans lequel une pluralité de capteurs de température sont répartis dans ledit matériau réactif dans ladite direction de flux de gaz pour déterminer la répartition de température dans ledit matériau réactif, dans la direction de flux de gaz, lors de la suppression ou lors de l'enlèvement du dioxyde de carbone.

4. Appareil selon la revendication 3 comprenant en outre un moyen de comparaison de ladite répartition de température détectée dans le matériau réactif à une caractéristique de répartition de température prédéterminée respective et un moyen d'alerte qui est déclenché en réponse aux différences détectées entre ladite répartition détectée et ladite caractéristique prédéterminée.

5. Appareil selon la revendication 4 comprenant en outre un moyen de détermination lorsque la différence de température détectée entre au moins une paire de capteurs de température dépasse une valeur maximale prédéterminée.

6. Appareil selon la revendication 5 comprenant en outre un capteur de pression et un moyen de sélection de ladite paire de capteurs de température à partir d'une pluralité de capteurs de température dans le matériau réactif selon la pression mesurée par ledit capteur de pression.

7. Appareil selon la revendication 5 comprenant en outre un moyen pour déterminer ladite différence de température maximale prédéterminée selon la pression mesurée par ledit capteur de pression.

8. Appareil selon la revendication 7 dans lequel ledit capteur de pression est un capteur de niveau d'eau.

9. Appareil selon l'une quelconque des revendications 4 à 8 dans lequel ledit moyen d'alerte est déclenché ou actionné en réponse à ladite différence de température détectée dépassant ladite valeur prédéterminée.

10. Appareil selon l'une quelconque des revendications 4 à 8 dans lequel ledit moyen d'alerte est déclenché ou actionné en réponse à la détection d'un chemin de flux de gaz canalisé préféré dans ledit matériau réactif.

11. Appareil selon l'une quelconque des revendications 4 à 8 dans lequel ledit moyen d'alerte est déclenché ou actionné en réponse à une différence détectée entre une répartition de température transitoire détectée dans ledit matériau réactif au début de la suppression ou de l'enlèvement du dioxyde de carbone et une caractéristique de répartition de température transitoire prédéterminée pour ledit matériau réactif.

12. Appareil selon l'une quelconque des revendications précédentes dans lequel ladite capacité d'absorption de dioxyde de carbone restante est déterminée selon la répartition de la température à l'état d'équilibre dans le matériau réactif.

13. Appareil selon la revendication 12 dans lequel ladite répartition de température à l'état d'équilibre comprend une région en amont de l'élévation de température dans la direction du flux et une région en aval de celle-ci de température sensiblement constante et élevée, et ledit moyen pour déterminer la teneur en dioxyde de carbone restante comprend un moyen permettant d'identifier la position de transition dans ledit matériau réactif entre lesdites régions en amont et en aval.

14. Appareil selon l'une quelconque des revendications précédentes comprenant en outre un moyen destiné à recevoir un signal de capteur de niveau d'eau et un moyen destiné à ajuster la capacité d'absorption de dioxyde de carbone restante déterminée dudit matériau réactif selon ledit signal de niveau.

15. Appareil selon l'une quelconque des revendications précédentes dans lequel ledit moyen de détermination est incorporé dans un microprocesseur.

16. Appareil selon l'une quelconque des revendications précédentes comprenant en outre un moyen d'affichage destiné à afficher des informations se rapportant à la capacité d'absorption de dioxyde de carbone restante déterminée dudit matériau réactif.

17. Procédé de détermination de la capacité d'absorption de dioxyde de carbone restante d'un matériau réactif dans un dispositif de lavage de dioxyde de carbone du type dans lequel du gaz expiré est amené à traverser un corps de matériau réactif destiné à supprimer ou enlever au moins une proportion de la teneur en dioxyde de carbone du gaz expiré avant ou suite à l'injection d'une quantité déterminée d'oxygène ou d'un mélange d'oxygène et d'autres gaz dans le gaz et la présentation du gaz pour la réinspiration ; ledit procédé comprenant les étapes suivantes :
recevoir des signaux provenant d'une pluralité de capteurs de température répartis dans ledit matériau réactif ;
déterminer la différence de température entre lesdits capteurs lors de la suppression ou de l'enlèvement du dioxyde de carbone ; et
déterminer la capacité d'absorption de dioxyde de carbone restante dudit matériau réactif directement à partir desdites températures mesurées indépendamment des données de calibrage.

18. Procédé selon la revendication 17 dans lequel les capteurs sont disposés dans au moins une première direction qui correspond à la direction du flux de gaz à travers le matériau réactif, et ledit procédé comprend l'étape consistant à déterminer le gradient de température dans ladite direction de flux.

19. Procédé selon la revendication 17 ou 18 dans lequel ledit procédé comprend en outre les étapes suivantes : comparer ladite répartition de température détectée dans le matériau réactif à une caractéristique de répartition de température prédéterminée respective pour ledit matériau réactif ; et déclencher ou actionner un moyen d'alerte en réponse aux différences détectées entre ladite répartition détectée et ladite caractéristique prédéterminée.

20. Procédé selon l'une quelconque des revendications 17 à 19 dans lequel ledit procédé comprend en outre les étapes suivantes : déterminer si la différence de température détectée entre au moins une paire de capteurs de température dépasse une valeur maximale prédéterminée ; et déclencher ou actionner ledit ou un moyen d'alerte en réponse à ladite différence de température détectée dépassant ladite valeur prédéterminée.

21. Procédé selon l'une quelconque des revendications 17 à 21 comprenant en outre l'étape consistant à déclencher ou à actionner ledit ou un moyen d'alerte en réponse à une différence détectée entre une répartition de température transitoire détectée dans ledit matériau réactif et une caractéristique de répartition de température transitoire prédéterminée pour ledit matériau réactif.

22. Procédé selon l'une quelconque des revendications 17 à 21 dans lequel ladite capacité d'absorption de dioxyde de carbone restante est déterminée selon la répartition de température à l'état d'équilibre dans le matériau réactif.

23. Procédé selon la revendication 22 dans lequel ladite répartition de température à l'état d'équilibre comprend une région en amont de l'élévation de température dans la direction de flux et une région en aval de celle-ci de température sensiblement constante et élevée, et ladite étape consistant à déterminer la teneur en dioxyde de carbone restante comprend l'étape consistant à identifier la position de transition dans ledit matériau réactif entre lesdites régions en amont et en aval.

24. Procédé selon l'une quelconque des revendications 17 à 23 dans lequel lesdits capteurs de température sont répartis dans tout ledit matériau réactif et ledit procédé comprend en outre l'étape consistant à déterminer le profil de température tridimensionnel dudit matériau réactif généré lors de la suppression ou de l'enlèvement du dioxyde de carbone.

25. Procédé selon l'une quelconque des revendications 17 à 24 comprenant en outre l'étape consistant à recevoir un signal de niveau d'eau provenant d'un capteur de niveau et à ajuster à la capacité d'absorption de dioxyde de carbone restante déterminée dudit matériau réactif selon ledit signal de niveau.

26. Procédé selon l'une quelconque des revendications 17 à 25 comprenant en outre l'étape consistant à afficher sur un moyen d'affichage des informations se rapportant à la capacité d'absorption de dioxyde de carbone restante déterminée dudit matériau réactif.
